# EUROPEAN PATENT APPLICATION

(11) **EP 4 207 678 A1**
(43) Date of publication of application: **05.07.2023**
(21) Application number: 21218020.2
(22) Date of filing: 28.12.2021
(51) Int. Cl.: H04L 9/40

(54) **NETWORK EQUIPMENT AND PROCESSING SYSTEM AND METHOD FOR LEARNING NETWORK BEHAVIOR CHARACTERISTICS**

(71) Applicant: Ecolux Technology Co., Ltd., Zhubei City, Hsinchu County 302 (TW)
(72) Inventor: LAI, YU-CHENG, Zhubei City, Hsinchu County 302 (TW)
(74) Representative: Bandpay & Greuter

(57) **Abstract**

A network equipment and a processing system and a method for learning network behavior characteristics comprise a client end, a server end and a network equipment. The network equipment receives a plurality of network packets transmitted from the client end to the server end to be used for training a learning model of the network equipment. The network equipment performs following steps of: storing a behavior result information in a characteristics storage unit; a packets capture unit capturing the network packets provided by the client end and storing the network packets in a packets storage unit; a characteristics capture unit analyzing the network packets from the packets storage unit, and obtaining a corresponding behavior characteristics information according to a characteristics template and storing the behavior characteristics information in the characteristics storage unit; a processing unit obtaining the behavior characteristics information and the behavior result information from the characteristics storage unit and loading the behavior characteristics information and the behavior result information into the learning model, and the learning model outputting a learning convergence information; and the processing unit determining to adjust the characteristics capture unit or to output a characteristics identification model from the learning model based on the learning convergence information.

## Description

### BACKGROUND OF THE INVENTION

### Field of Invention

The invention relates to an electronic device, a processing system and a method with learning ability, and more particularly to a network equipment and a processing system and a method for learning network behavior characteristics.

### Related Art

With the rapid development of the Internet, in addition to accelerating the transmission of information, it has also changed the behavior of many industries. In order to ensure security on the Internet, how to prevent cyber attacks is a major issue. The conventional way to prevent cyber attacks is to start packets analysis after an attack occurs. Due to the diversification of Internet transmission methods, the past single-type cyber attacks have begun to transform into compound attacks or new attack methods. However, in facing the challenge of such cyber attacks, conventional servers or network equipment can only rely on preventive measures by updating afterwards, and cannot send out notification of the attack at the moment when it occurs, so the timing of response will be missed.

### SUMMARY OF THE INVENTION

Therefore, in order to effectively solve the above-mentioned problems, a main object of the invention is to provide a network equipment and a processing system and a method for learning network behavior characteristics with learning capabilities.

In order to achieve the above object, the invention provides a network equipment for learning network behavior characteristics comprising: a packets capture unit capturing a plurality of network packets; a packets storage unit connected to the packets capture unit, and the packets storage unit stores the network packets; a characteristics capture unit connected to the packets storage unit and analyzing the network packets with at least one characteristics template, and capturing at least one behavior characteristics information of the network packets; a characteristics storage unit connected to the characteristics capture unit, the characteristics storage unit stores the behavior characteristics information, and the characteristics storage unit further stores a plurality of behavior result information; a processing unit receiving the behavior characteristics information and the behavior result information; and a learning model outputting a learning convergence information based on the at least one behavior characteristics information and one of the behavior result information, and the processing unit determines to adjust the characteristics capture unit or to output a characteristics identification model from the learning model based on the learning convergence information.

According to one embodiment of the network equipment for learning network behavior characteristics of the invention, wherein the processing unit determines to adjust the characteristics capture unit according to the learning convergence information, the characteristics capture unit adjusts the characteristics template according to adjustment requirements of the processing unit, and the characteristics capture unit analyzes the network packets from the adjusted characteristics template to capture the new behavior characteristics information of the network packets.

The invention further provides a processing system for learning network behavior characteristics comprising: at least one client end transmitting a plurality of network packets; at least one server end receiving the network packets; and a network equipment having a packets capture unit, a characteristics capture unit, a packets storage unit, a characteristics storage unit, a processing unit, and a learning model. The packets capture unit captures the network packets flowing through the client end and the server end, the packets storage unit stores the network packets, and the characteristics capture unit analyzes the network packets with at least one characteristics template, and captures at least one behavior characteristics information of the network packets, and the characteristics storage unit stores the behavior characteristics information and a plurality of behavior result information. The processing unit receives the behavior characteristics information and the behavior result information and inputs the behavior characteristics information and the behavior result information into the learning model, so that the learning model outputs a learning convergence information based on the at least one behavior characteristics information and one of the behavior result information. The processing unit determines to adjust the characteristics capture unit or output a characteristics identification model from the learning model based on the learning convergence information.

According to one embodiment of the processing system for learning network behavior characteristics of the invention, wherein the processing unit determines to adjust the characteristics capture unit according to the learning convergence information, the characteristics capture unit adjusts the characteristics template according to adjustment requirements of the processing unit, and the characteristics capture unit analyzes the network packets from the adjusted characteristics template to capture the new behavior characteristics information of the network packets.

According to one embodiment of the processing system for learning network behavior characteristics of the invention, wherein the server end further comprises an abnormal behavior detector, the abnormal behavior detector detects at least one abnormal behavior information from the network packets, and the abnormal behavior detector sends the abnormal behavior information to a behavior analysis unit.

According to one embodiment of the processing system for learning network behavior characteristics of the invention, the behavior analysis unit is connected to the characteristics capture unit and the packets storage unit, the behavior analysis unit analyzes the network packets in the packets storage unit according to the abnormal behavior information, and requests the characteristics capture unit to adjust the characteristics template.

The invention further provides a processing method for learning network behavior characteristics comprising steps of: storing at least one behavior result information in a characteristics storage unit; a packets capture unit capturing network packets provided by at least one client end and storing the network packets in a packets storage unit; a characteristics capture unit analyzing the network packets from the packets storage unit, and obtaining a corresponding behavior characteristics information according to at least one characteristics template and storing the behavior characteristics information in the characteristics storage unit; a processing unit obtaining the behavior characteristics information and the behavior result information from the characteristics storage unit and loading the behavior characteristics information and the behavior result information into a learning model, and the learning model outputting a learning convergence information; and the processing unit determining to adjust the characteristics capture unit or to output a characteristics identification model from the learning model based on the learning convergence information.

According to one embodiment of the processing method for learning network behavior characteristics of the invention, wherein the step of adjusting the characteristics capture unit by the processing unit according to the learning convergence information comprises: the characteristics capture unit adjusting the characteristics template according to adjustment requirements of the processing unit; and the characteristics capture unit analyzing the network packets from the adjusted characteristics template to capture the new behavior characteristics information of the network packets.

According to one embodiment of the processing method for learning network behavior characteristics of the invention, further providing an abnormal behavior detector, the abnormal behavior detector detecting at least one abnormal behavior information from the network packets, and the abnormal behavior detector sending the abnormal behavior information to a behavior analysis unit.

According to one embodiment of the processing method for learning network behavior characteristics of the invention, the behavior analysis unit analyzing the network packets in the packets storage unit according to the abnormal behavior information, and requesting the characteristics capture unit to adjust the characteristics template.

### BRIEF DESCRIPTION OF THE DRAWINGS

FIG. 1 is a schematic diagram of a system architecture of a processing system for learning network behavior characteristics of the invention.
FIG. 2 is a schematic diagram of contents of a behavior characteristics information of the invention.
FIG. 3 is a schematic diagram of another system architecture of the processing system for learning network behavior characteristics of the invention.
FIG. 4 is a schematic diagram of a procedure of a processing method for learning network behavior characteristics of the invention.

### DETAILED DESCRIPTION OF THE INVENTION

The above objects of the invention, as well as its structural and functional features, will be described in accordance with the preferred embodiments of the accompanying drawings.

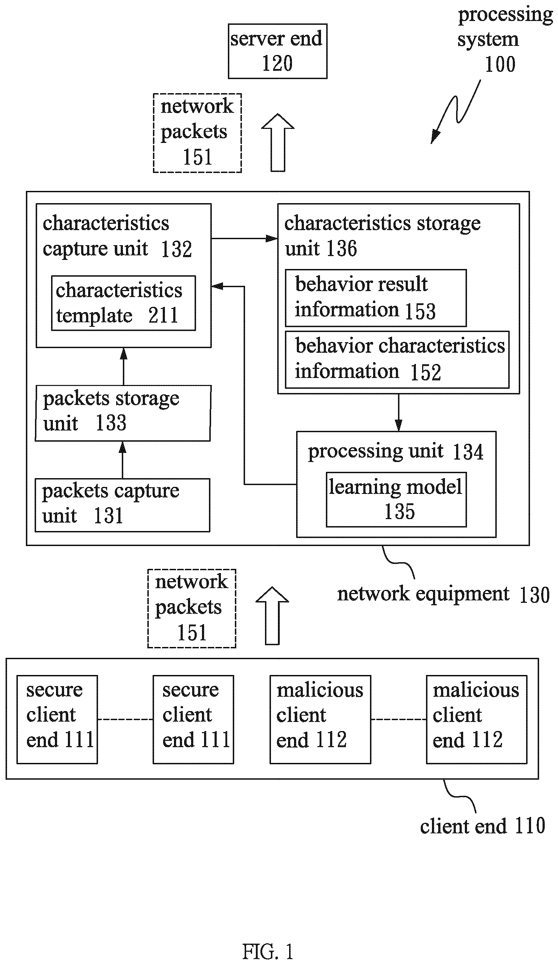

Please refer to FIG. 1 for a schematic diagram of a system architecture of a processing system for learning network behavior characteristics of the invention. A processing system 100 for learning network behavior characteristics comprises a plurality of client ends 110, a plurality of server ends 120, and a network equipment 130. The network equipment 130 is connected between the client ends 110 and the server ends 120 via network. The network equipment 130 can be, but is not limited to, router, gateway, repeater, or bridge.

The client end 110 sends a plurality of network packets 151 to the server end 120.

The network equipment 130 has a packets capture unit 131, a packets storage unit 133, a characteristics capture unit 132, a characteristics storage unit 136, a processing unit 134, and a learning model 135. The packets capture unit 131 captures the network packets 151 flowing from the client end 110 through the server end 120. The packets capture unit 131 transmits the obtained network packets 151 to the packets storage unit 133, and the network packets 151 are stored in the packets storage unit 133. The characteristics capture unit 132 is connected to the packets storage unit 133, the characteristics storage unit 136 and the processing unit 134.

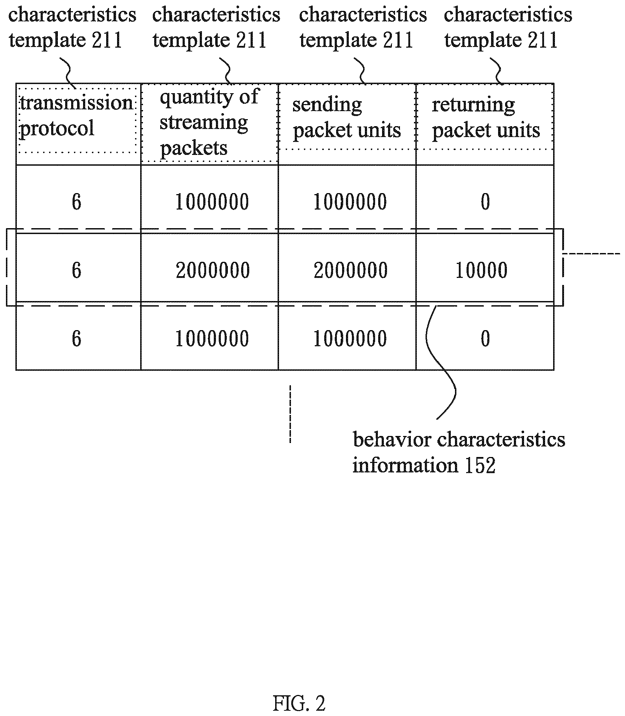

The characteristics capture unit 132 obtains the network packets 151 from the packets storage unit 133, and obtains a behavior characteristics information 152 from the network packets 151 according to a characteristics template 211. The characteristics capture unit 132 is capable of analyzing based on each of the network packets 151, a fixed quantity of the network packets 151, or the network packets 151 acquired in a fixed period of time to obtain the behavior characteristics information 152. The characteristics template 211 comprises transmission protocol, quantity of capture, header information, transmission port number, transmission time, packet content, transmission speed, transmission direction, number of times of TCP flags, receiving end, quantity of packets, packet size, inter arrival time, data stream activity time, data stream idle time of the network packets 151 at a sending end or a receiving end, as shown in FIG. 2. Wherein the characteristics capture unit 132 obtains the behavior characteristics information 152 of the network packet 151 via the characteristics template 211. In FIG. 2, contents of the behavior characteristics information 152 and the characteristics template 211 are shown, the behavior characteristics information 152 shown is a set of quantitative data, matrices, or images. The characteristics template 211 is not limited to the four groups in the embodiment in FIG. 2, and a quantity can be adjusted according to a learning status of the learning model 135.

The characteristics capture unit 132 stores the obtained behavior characteristics information 152 to the characteristics storage unit 136, the processing unit 134 obtains the behavior characteristics information 152 and a behavior result information 153 from the characteristics storage unit 136 and loads the behavior characteristics information 152 and the behavior result information 153 into the learning model 135, and the learning model 135 learns according to the behavior characteristics information 152 and the behavior result information 153. Wherein the learning model 135 is composed of artificial intelligence algorithms, artificial intelligence algorithms can be but are not limited to only comprising artificial neural network, decision tree, perceptron, support vector machine, integrative learning, dimensionality reduction and metric learning, clustering, Bayes classifier or feed forward neural network model. In addition, the behavior result information 153 will be obtained and stored in the characteristics storage unit 136 before the processing system 100 is built, the behavior result information 153 is mainly used to analyze the network packets 151 of a known secure client end 111 through an external analyzer and obtain the behavior characteristics information 152 from the external analyzer, which can be regarded as the normal behavior characteristics information 152, and the normal behavior result information 153 is generated for the normal behavior characteristics information 152 correspondingly. On the contrary, the network packets 151 of a known malicious client end 112 are analyzed to obtain the malicious behavior result information 153, and the behavior result information 153 is stored in the characteristics storage unit 136. The behavior result information 153 can be a quantitative data, a matrix, or an image. If the feed forward neural network model is taken as an example, the normal behavior result information 153 is an integer 1, and the malicious behavior result information 153 is an integer 0.

The learning model 135 learns network attack behaviors according to the received behavior characteristics information 152 and behavior result information 153, and the learning model 135 outputs a learning result as a learning convergence information. Wherein the processing unit 134 is connected to the characteristics capture unit 132 and the characteristics storage unit 136, in addition to executing the learning model 135, the processing unit 134 also evaluates according to the learning convergence information outputted by the learning model 135 to determine whether the learning convergence information of the learning model 135 meets a learning goal, and determines to adjust the characteristics capture unit 132 or output a characteristics identification model from the learning model 135, wherein if the processing unit 134 determines that the learning convergence information of the learning model 135 meets the learning goal, the characteristics identification model is outputted, on the contrary, the processing unit 134 adjusts the characteristics capture unit 132.

The learning convergence information can be roughly divided into two states, namely a convergent state and a non-convergent state. When the learning convergence information is in a convergent state, it meets the learning goal, and the non-converged state is the opposite. For example, the processing unit 134 presets a threshold value of 0.9, and the learning convergence information exceeds the value 0.9 to meet the convergence state. On the contrary, if the outputted learning convergence information is 0.85, that is, the non-convergent state, and the threshold value of 0.9 can be set according to the artificial intelligence algorithms, the behavior result information 153 or the learning model 135, and is not limited to 0.9. The above-mentioned convergent and non-convergent states are also different due to differences in the artificial intelligence algorithms, the behavior result information 153, or the learning model 135, and are not limited.

Wherein, when the processing unit 134 adjusts the characteristics capture unit 132, if the learning goal is not met for a certain number of times or for a period of time, the processing unit 134 sends an adjustment request to the characteristics capture unit 132, and the characteristics capture unit 132 adjusts the characteristics template 211 according to the adjustment request. In other words, the characteristics capture unit 132 will select the new characteristics template 211 from a set of the existing characteristics templates 211, or capture the new characteristics template 211 from the network packets 151, and the characteristics capture unit 132 analyzes the network packets 151 according to the adjusted characteristics template 211, and then obtains the new behavior characteristics information 152 from the new characteristics template 211 and stores the new behavior characteristics information 152 in the characteristics storage unit 136 for the learning model 135 to learn.

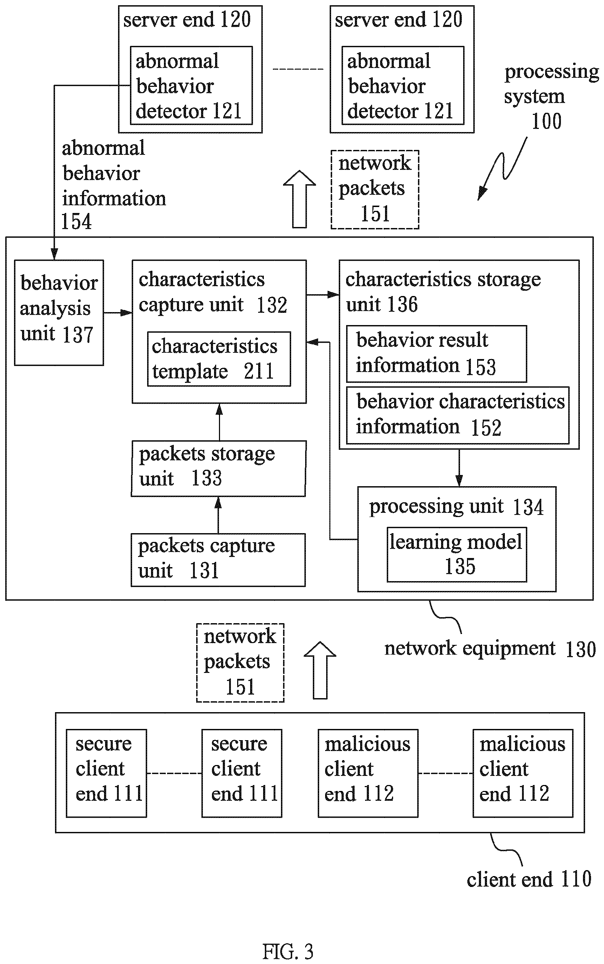

The characteristics capture unit 132 can also be adjusted in another way, as shown in FIG. 3, a schematic diagram of another system architecture of the processing system for learning network behavior characteristics of the invention, wherein the server end 120 further comprises an abnormal behavior detector 121, the abnormal behavior detector 121 detects an abnormal behavior information 154 from the network packets 151, and the abnormal behavior detector 121 sends the abnormal behavior information 154 to a behavior analysis unit 137. The behavior analysis unit 137 is connected to the characteristics capture unit 132 and the packets storage unit 133, and the behavior analysis unit 137 analyzes the network packets 151 in the packets storage unit 133 according to the abnormal behavior information 154, and requests the characteristics capture unit 132 to adjust the characteristics template 211. For example, an operating load of a central processing unit of the server end 120 is maintained at 50% normally, if an operating load of the server end 120 suddenly increases to 90% and continues to operate for a long time, the abnormal behavior detector 121 determines it as the abnormal behavior information 154. At this time, the abnormal behavior detector 121 will send the abnormal behavior information 154 in that period of time to the behavior analysis unit 137, and the behavior analysis unit 137 will analyze the network packets 151 in the packets storage unit 133 in that period of time, and request the characteristics capture unit 132 to adjust the characteristics template 211 according to an analysis result. Abnormal behavior is not limited to operating load, it can also be packet size, traffic size, protocol type, port number or network service, etc., and the behavior analysis unit 137 can use exhaustive algorithm for packets analysis.

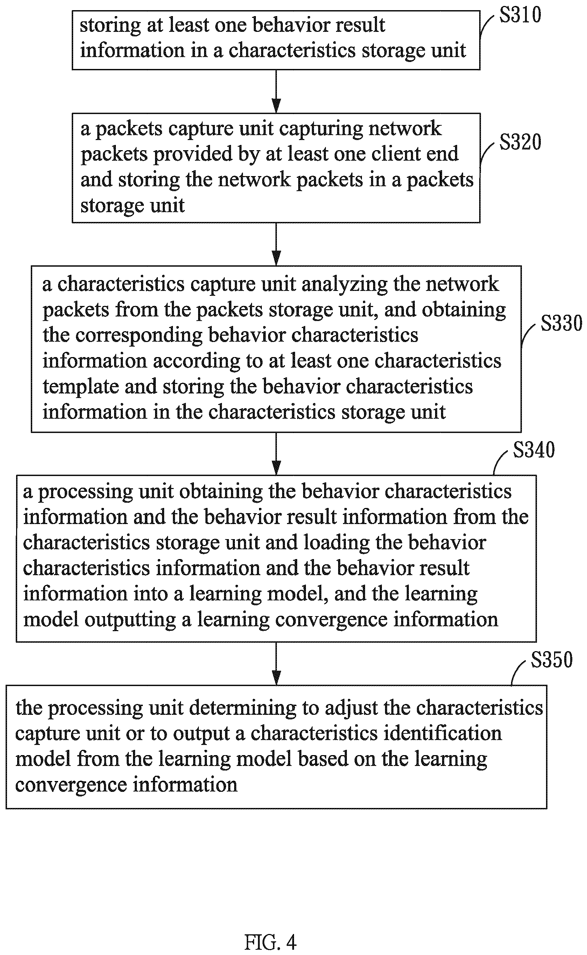

In order to clearly illustrate an operation process of this embodiment, please also refer to FIG. 4 for a schematic diagram of a procedure of a processing method for learning network behavior characteristics of the invention. A processing method for learning network behavior characteristics comprises following steps of:
step S310: storing at least one behavior result information 153 in a characteristics storage unit 136; an external analyzer analyzing network packets 151 of a known secure client end 111 or a malicious client end 112 and obtaining a normal or malicious behavior characteristics information 152, and generating the corresponding behavior result information 153 from the normal or malicious behavior characteristics information 152 and storing the behavior result information 153 in the characteristics storage unit 136;
step S320: a packets capture unit 131 capturing the network packets 151 provided by at least one client end 110 and storing the network packets 151 in a packets storage unit 133; firstly, a network equipment 130 receiving the network packets 151 sent by the client end 110 to a server end 120, the packets capture unit 131 of the network equipment 130 obtaining the network packets 151 through packet sniffing or bypass, so that the network packets 151 sent from the client end 110 to the server end 120 can be sent and stored to the packets storage unit 133 at the same time;
step S330: a characteristics capture unit 132 analyzing the network packets 151 from the packets storage unit 133, and obtaining the corresponding behavior characteristics information 152 according to at least one characteristics template 211 and storing the behavior characteristics information in the characteristics storage unit 136, wherein the characteristics capture unit 132 analyzes the network packets 151 through a network traffic monitoring software, such as: Netflow, but it is not limited thereto;
step S340: a processing unit 134 obtaining the behavior characteristics information 152 and the behavior result information 153 from the characteristics storage unit 136 and loading the behavior characteristics information 152 and the behavior result information 153 into a learning model 135, and the learning model 135 outputting a learning convergence information; the learning model 135 learning according to the behavior characteristics information 152 and the behavior result information 153, and the learning model 135 outputting a learning result as the learning convergence information; and
step S350: the processing unit 134 determining to adjust the characteristics capture unit 132 or to output a characteristics identification model from the learning model 135 based on the learning convergence information; wherein the processing unit 134 continuously obtains the learning convergence information corresponding to different time periods or combinations of the client end 110, and the processing unit 134 evaluates a learning state of the learning model 135 according to the acquired learning convergence information, if the learning convergence information continues to be in a convergent state, the processing unit 134 stores the learning model 135 as the characteristics identification model, and the processing unit 134 outputs the characteristics identification model to the other network equipment 130.

Conversely, if the learning convergence information continues to be in a non-convergent state, the processing unit 134 sends an adjustment request to the characteristics capture unit 132, and the characteristics capture unit 132 adjusts the characteristics template 211 according to the adjustment request; in other words, the characteristics capture unit 132 will select the new characteristics template 211 from a set of the existing characteristics templates 211, or capture the new characteristics template 211 from the network packets 151. The characteristics capture unit 132 analyzes the network packets 151 according to the adjusted characteristics template 211 in order to obtain the new behavior characteristics information 152 and store the new behavior characteristics information 152 in the characteristics storage unit 136. Then, the processing unit 134 executes the steps S340 and S350 again according to the new behavior characteristics information 152 and the corresponding behavior result information 153 in order to obtain the new learning convergence information. A method of adjusting the characteristics template 211 can be adding or deleting the characteristics template 211.

Wherein, if the learning convergence information still fails to converge after executing the step S350 many times, the behavior analysis unit 137 analyzes the network packets 151 in the packets storage unit 133 according to the abnormal behavior information 154, and requests the characteristics capture unit 132 to adjust the characteristics template 211.

Thereby, the network equipment 130, the processing system 100, and the processing method for learning network behavior characteristics of the invention are capable of learning the network packets 151 and the corresponding behavior characteristics, so as to adjust a judgment accuracy of the learning model 135. In addition, the server end 120 of the processing system 100 can also provide the behavior characteristics information 152 of unidentified malicious attacks. The network equipment 130 achieves an object of comprehensive protection through data sources of different channels.

It is to be understood that the above description is only preferred embodiments of the invention and is not used to limit the invention, and changes in accordance with the concepts of the invention may be made without departing from the spirit of the invention, for example, the equivalent effects produced by various transformations, variations, modifications and applications made to the configurations or arrangements shall still fall within the scope covered by the appended claims of the invention.

## Claims

1. A network equipment for learning network behavior characteristics comprising:
a packets capture unit capturing a plurality of network packets;
a packets storage unit connected to the packets capture unit, and the packets storage unit storing the network packets;
a characteristics capture unit connected to the packets storage unit and analyzing the network packets with at least one characteristics template, and capturing at least one behavior characteristics information of the network packets;
a characteristics storage unit connected to the characteristics capture unit, the characteristics storage unit storing the behavior characteristics information, and the characteristics storage unit further storing a plurality of behavior result information;
a processing unit receiving the behavior characteristics information and the behavior result information; and
a learning model outputting a learning convergence information based on the at least one behavior characteristics information and one of the behavior result information, and the processing unit determining to adjust the characteristics capture unit or to output a characteristics identification model from the learning model based on the learning convergence information.

2. The network equipment for learning network behavior characteristics as claimed in claim 1, wherein the processing unit determines to adjust the characteristics capture unit according to the learning convergence information, the characteristics capture unit adjusts the characteristics template according to adjustment requirements of the processing unit, and the characteristics capture unit analyzes the network packets from the adjusted characteristics template to capture the new behavior characteristics information of the network packets.

3. A processing system for learning network behavior characteristics comprising:
at least one client end transmitting a plurality of network packets;
at least one server end receiving the network packets; and
a network equipment having a packets capture unit, a characteristics capture unit, a packets storage unit, a characteristics storage unit, a processing unit, and a learning model, the packets capture unit capturing the network packets flowing through the client end and the server end, the packets storage unit storing the network packets, the characteristics capture unit analyzing the network packets with at least one characteristics template, and capturing at least one behavior characteristics information of the network packets, the characteristics storage unit storing the behavior characteristics information and a plurality of behavior result information, the processing unit receiving the behavior characteristics information and the behavior result information and inputting the behavior characteristics information and the behavior result information into the learning model, so that the learning model outputting a learning convergence information based on the at least one behavior characteristics information and one of the behavior result information, and the processing unit determining to adjust the characteristics capture unit or outputting a characteristics identification model from the learning model based on the learning convergence information.

4. The processing system for learning network behavior characteristics as claimed in claim 3, wherein the processing unit determines to adjust the characteristics capture unit according to the learning convergence information, the characteristics capture unit adjusts the characteristics template according to adjustment requirements of the processing unit, and the characteristics capture unit analyzes the network packets from the adjusted characteristics template to capture the new behavior characteristics information of the network packets.

5. The processing system for learning network behavior characteristics as claimed in claim 3, wherein the server end further comprises an abnormal behavior detector, the abnormal behavior detector detects at least one abnormal behavior information from the network packets, and the abnormal behavior detector sends the abnormal behavior information to a behavior analysis unit.

6. The processing system for learning network behavior characteristics as claimed in claim 5, the behavior analysis unit being connected to the characteristics capture unit and the packets storage unit, the behavior analysis unit analyzing the network packets in the packets storage unit according to the abnormal behavior information, and requesting the characteristics capture unit to adjust the characteristics template.

7. A processing method for learning network behavior characteristics comprising steps of:
storing at least one behavior result information in a characteristics storage unit;
a packets capture unit capturing network packets provided by at least one client end and storing the network packets in a packets storage unit;
a characteristics capture unit analyzing the network packets from the packets storage unit, and obtaining a corresponding behavior characteristics information according to at least one characteristics template and storing the behavior characteristics information in the characteristics storage unit;
a processing unit obtaining the behavior characteristics information and the behavior result information from the characteristics storage unit and loading the behavior characteristics information and the behavior result information into a learning model, and the learning model outputting a learning convergence information; and
the processing unit determining to adjust the characteristics capture unit or to output a characteristics identification model from the learning model based on the learning convergence information.

8. The processing method for learning network behavior characteristics as claimed in claim 7, wherein the step of adjusting the characteristics capture unit by the processing unit according to the learning convergence information comprises:
the characteristics capture unit adjusting the characteristics template according to adjustment requirements of the processing unit; and
the characteristics capture unit analyzing the network packets from the adjusted characteristics template to capture the new behavior characteristics information of the network packets.

9. The processing method for learning network behavior characteristics as claimed in claim 7, further providing an abnormal behavior detector, the abnormal behavior detector detecting at least one abnormal behavior information from the network packets, and the abnormal behavior detector sending the abnormal behavior information to a behavior analysis unit.

10. The processing method for learning network behavior characteristics as claimed in claim 9, the behavior analysis unit analyzing the network packets in the packets storage unit according to the abnormal behavior information, and requesting the characteristics capture unit to adjust the characteristics template.
